# EUROPEAN PATENT SPECIFICATION

(11) **EP 0 675 303 B1**
(45) Date of publication and mention of the grant of the patent: **15.07.1998**
(21) Application number: 95100933.1
(22) Date of filing: 25.01.1995
(51) Int. Cl.: F16J 15/34

(54) **Seal for mechanically sealing a coolant pump of a diesel internal combustion engine and method of forming such a seal**
Dichtung zum mechanischen Abdichten einer Kühlmittelpumpe einer Dieselbrennkraftmaschine und Verfahren zu deren Herstellung
Garniture produisant une étanchéité mécanique pour la pompe du liquide de refroidissement d'un moteur diesel à combustion interne et procédé de fabrication d'une telle garniture

(30) Priority: 30.03.1994 US 220267
(43) Date of publication of application: 04.10.1995
(73) Proprietor: CUMMINS ENGINE COMPANY, INC., Columbus Indiana 47201 (US)
(72) Inventor: Stafford, Randall J., Columbus, Indiana 47203 (US); Yonushonis, Thomas M., Columbus, Indiana 47201 (US)
(74) Representative: Patentanwälte Gesthuysen, von Rohr, Weidener, Häckel

(56) References cited:
- EP-A- 0 351 554
- EP-A- 0 435 272
- DE-A- 4 302 407
- US-A- 4 275 889

## Description

The present invention is directed generally to seals for internal combustion engine coolant pumps and specifically to a hard, low friction, high thermal conductivity seal face for an internal combustion engine coolant pump and to a method for forming such a seal face. Especially, the present invention relates to a seal according to the preamble of claim 1 and to a method for forming a seal assembly for a coolant pump of a heavy duty diesel engine.

Internal combustion engine coolant pumps typically include a mechanical face seal with at least one surface that rotates relative to a second surface that does not rotate, but is stationary. A fluid film of coolant or coolant vapor usually separates the seal surfaces and conducts heat away from the seal face interface to maintain the face temperature within an optimum operating range. When the face temperature exceeds the boiling point of the coolant flowing through the pump, deposits form and adhere to the seal face surfaces. The formation and adherence of these deposits to the seal face surfaces causes the faces to separate so that a tight seal cannot be formed. As a result, the coolant pump face seals leak.

The mechanical seal arrangement employed by most internal combustion engine coolant pumps creates a great deal of wear on the sealing faces. These faces, which are usually formed on the interfacing surfaces of a stationary ring element and a rotatable ring element, are subjected to wear-producing forces during pump operation. When the sealing faces become worn, the seal fails and the pump leaks. The use of a hard wear-resistant material, such as, for example, an alumina ceramic, to form the sealing faces reduces wear; however, such materials produce undesired friction between the faces. The heat generated by high friction reduces mechanical efficiency and subjects the sealing rings to wear and other damage.

The precipitation of coolant solids produced when the face temperatures exceed the coolant boiling point ist exacerbated by the presence of the chemical coolant additives often used to enhance coolant performance. These solids show a tendency to adhere to and build up on the mechanical seal sealing faces and cause seal leakage and failure.

The prior art has addressed some of the problems which accompany face seal fittings and operation. For example, US - A - 3,874,680 discloses a mechanical face seal for an automotive engine water pump made of a ceramic material, preferably a sintered magnesia-alumina spinel. The seal rings can also be formed of another material, such as alumina ceramic, and faced with sintered magnesia-alumina, although this is stated not to provide any advantages beside cost saving. A water pump seal ring made as described in this patent may have some of the wear-resistance and low friction characteristics desired; however, the desired seal interface heat reduction characteristics may not be achieved.

US - A - 5,129,688 discloses a torque-reducing conduit connection including a metal ring coated with a diamond material positioned in an annular groove. This arrangement is stated to facilitate the movement of the ring in the groove so that the conduit, which is intended to be used in pressurized systems in an ultra-clean environment, can be sealed with diminished torque. It is not suggested that the face seal separation problem caused by high face temperatures exceeding the coolant boiling temperature in an internal combustion engine coolant pump could be solved by such an arrangement.

US - A - 3,969,451 discloses a mechanical seal useful for a rotating shaft water pump including cooperating sealing elements, one of which is composed of a filled graphitic matrix and the other of which is a ceramic material. This combination of materials does not provide the hardness, low friction or heat conductivity desired for a long lasting reliable seal. The rotary mechanical face seal formed of carbon disclosed in US - A - 5,135,235 and the sintered silicon carbide mechanical seal disclosed in US - A - 5,080,378 present similar disadvantages.

US - A - 4,275,889, which forms the starting point of the present invention, discloses a seal according to the preamble of claim 1. This seal comprises a seal washer and a stationary sealing ring each made of silicon carbide. This seal also shows the above-mentioned drawbacks.

EP - A - 0 351 554 discloses another seal comprising one stationary sealing ring and a rotatable sealing ring, wherein both rings are axially biased to each other. In order to enhance the resistance against wear and corrosion, the sliding surface of one ring comprises a coating of diamond like carbon.

DE - A - 43 02 407 describes a method for coating a silicon nitride substrate with a diamond film by vapour deposition. The film has preferably a thickness of 5 to 100 µm and has a high caloric conductibility, hardness and capacity of resistance to wear.

A need exists, therefore, for a durable, reliable face seal element for the mechanical seal assembly of an internal combustion engine coolant pump that is hard and resists wear, has a low coefficient of friction and has high heat conductivity and for a method for forming such a face seal element.

It is a primary object of the present invention, therefore, to overcome the disadvantages of the prior art and provide a durable, reliable face seal element for an internal combustion engine coolant pump that displays high hardness, low friction and high conductivity and to provide a method for forming this face seal element.

It is another object of the present invention to provide a face seal element for an internal combustion engine coolant pump that is resistant to the adhesion and build up of precipitated coolant solids on the seal face. It is a further object of the present invention to provide a face seal element for an internal combustion engine coolant pump that is inherently stable and resistant to damage from precipitated coolant solids.

It is yet another object of the present invention to provide a face seal element for an internal combustion engine coolant pump which reduces the interface temperature between cooperating face seal elements in the coolant pump mechanical seal assembly and avoids heating the coolant to temperatures in excess of the coolant boiling temperature.

It is yet a further object of the present invention to provide a method for making an inherently stable, high hardness, high thermal conductivity, low friction face seal element for an internal combustion engine coolant pump.

The aforesaid objects are achieved by a seal with the features of claim 1 and a method according to claim 10, respectively. Advantageous embodiments are subject of the subclaims.

Especially, it is provided a face seal for an internal-combustion engine coolant pump face seal element comprising a covalently bonded high hardness, high thermal conductivity, low friction film coated on a compatible substrate. The film is formed from diamond and is preferably applied to a silicon carbide, silicon nitride or like compatible ceramic substrate or to a compatible metal substrate. The face seal element is formed by providing a selected silicon carbide, silicon nitride or like substrate or a metal substrate configured to the shape required to form a face seal element for an internal combustion engine coolant pump and coating the substrate with a film of diamond by a chemical vapor deposition process. The diamond coated substrate may optionally be lapped and polished prior to installation in the coolant pump sealing assembly.

Other objects and advantages will be apparent from the following description, claims and drawings.
- Figure 1: is a cross-sectional view of an internal combustion engine coolant pump seal; and
- Figure 2: is a sectional view of a seal ring taken along lines 2-2 of Figure 1.

The type of coolant pump typically employed in a liquid cooled heavy duty diesel internal combustion engine has a face seal which prevents coolant from leaking out of the coolant system between the stationary housing of the pump and the rotating pump shaft. Ideally, such coolant pumps should operate for at least 482 000 km (300,000 mil) without failure, particularly when they are installed in large truck engines. However, the available coolant pump face seals have heretofore not reliably withstood either the rotational torques encountered during pump operation or the corrosive action of chemicals contained in the coolant.

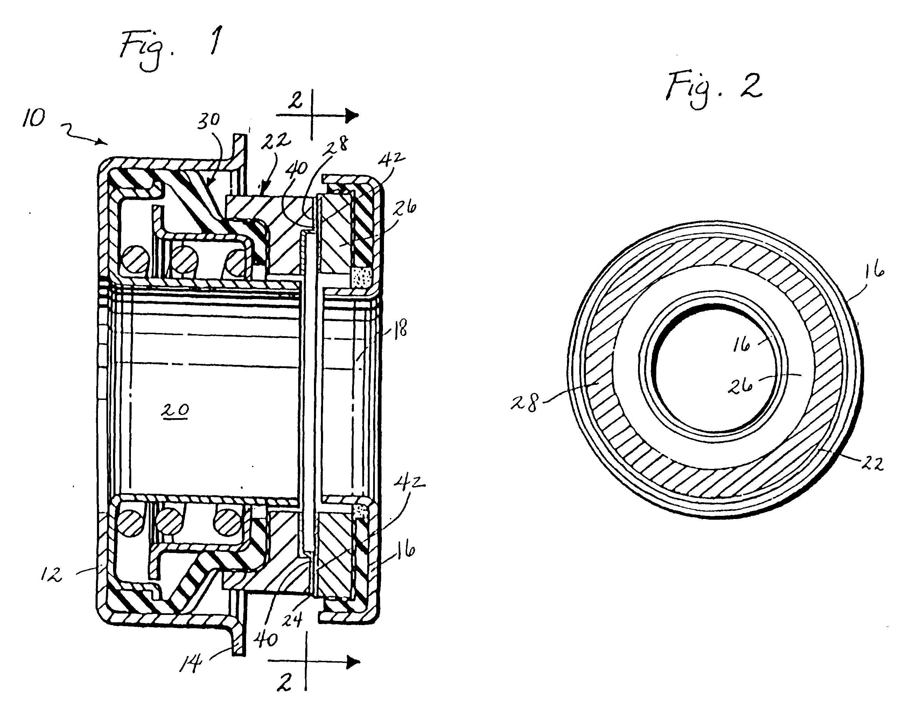

Referring to the drawings, Figure 1 is a sectional view of a type of face seal 10 used in a heavy duty diesel internal combustion engine. The face seal 10 is positioned between the coolant pump body (not shown) and a shaft (not shown). The face seal includes a tubular cap portion 12 with a radial flange 14 which functions as a stop when the face seal cap portion is pressed into a sealed fit with the pump body (not shown). The face seal 10 further includes an annular cup 16 which has a U-shaped cross-sectional configuration. The central opening 18 of the cup 16 is sized to be secured to the coolant pump shaft (not shown) by a press fit. The tubular cap portion 12 of the face seal 10 includes an axially extending central section 20, which is sized to extend around the coolant pump shaft (not shown) without engaging the shaft.

An annular seal ring 22 with a nose 24 that engages a seat washer 26 in the annular cup 16 does not rotate with the coolant pump shaft (not shown). A hydrodynamic film is formed between the adjoining surfaces of the seal ring 22 and the seat washer 26 at interface 28.

The seal ring 22 is supported on the tubular cap portion 12 by a bellows 30, which acts as a support for the seal ring 22 and also forms a seal between the seal ring 22 and the cap 12. The ring 22 is usually secured to the bellows 30 by a press fit and by a suitable adhesive. The cup 16, the seat washer 26, the outer periphery of the seal ring 22 and part of the surface of the bellows 30 are exposed to the coolant, coolant additives and other chemicals and debris in the coolant system.

The primary causes of face seal failure are the chemicals in the coolant and the rotational torques to which the seal is subjected during coolant pump operation. The rotational torques arise from the "stick-slip" characteristics of operation of this type of seal. The interface 28 between the opposing faces of the seat washer 26 and the seal ring 22 normally is separated by a hydraulic film positioned between these faces. When the film is present, the film lowers coefficient of friction between the seat washer and seal ring faces at interface 28. However, the coefficient of friction increases if even part of the film disappears, even for an instant. It is typical of the operation of such a seal that the film varies during coolant pump operation and that the interface 28 will frequently stick together momentarily and then slip as the seat washer 26 rotates relative to the seal ring 22. The rotational torque on the seal parts increases substantially during a stick period, and the seal ring 22 tends to turn with the washer 26 during the stick period. As the coefficient of friction increases, the temperature of the faces at interface 28 increases. If the temperature of the faces exceeds the boiling point of the coolant, coolant chemicals precipitate on the faces of the ring 22 and washer 26. This increases the width of the interface 28 and prevents the formation of a proper seal. The present invention avoids undesirable temperature increase at interface 28.

The dynamic torque on the seal ring 22 also can be minimized by the face seal of the present invention. The dynamic torque is the sum of the steady torque and the varying torque which arises from the alternate stick-slip contact between the ring 22 and the washer 26. One of the solutions proposed to reduce face seal failure due to rotational torque problems was to make both the seat washer 26 and the seal ring 22 of the same material, preferably silicon carbide, so that both components would have the same hardness. While this minimized the dynamic torque on the ring 22, the formation of deposits from the coolant and the adherence of these deposits to the seal faces when the seal face temperatures exceeded the coolant boiling point was still a problem. The present invention has solved both the problem of excess dynamic torque and the problem of face seal failure resulting from deposit formation.

The coolant pump face seal of the present invention is similar in construction to that described in US - A - 4,275,889.
The disclosure of US - A - 4,275,889 is hereby incorporated herein by reference.

The present invention provides a high hardness, covalently bonded, high thermal conductivity seal face surface for heavy duty internal combustion engine coolant pumps. A heat conduction path is provided to conduct heat away from the seal face interface, which reduces the interface temperature so that the coolant is not heated above its boiling point. The present invention also provides a very hard non-reactive surface. This surface is inherently stable and resistant to damage by solids precipitated from the coolant. It is further resistant to adhesion and to the build up of precipitated solids.

Figure 2 illustrates the face seal of the present invention in a sectional view taken along line 2-2 of Figure 1. This view clearly illustrates the annular configurations of the seat washer 26, the seal ring 22 and the cup 16. The area of engagement of the interface 28 is shown by the cross-hatched area. As will be described in detail hereinbelow, at interface 28 each of the seat washer 26 and the seal ring 22 has a diamond coating. Additionally, the radial dimension of the interface 28 is selected to provide maximum reduction in dynamic torque during boundary lubrication conditions.

The surfaces of seal ring 22 and seat washer 26 are each coated with a diamond film or coating at 40 and 42, respectively. The diamond films 40 and 42 extend beyond the interface 28 of the seal ring 22 and the seat washer 26 to provide a heat conduction path away from the interface 28. The high thermal conductivity of the diamond film lowers the temperature rise that would otherwise occur at interface 28, which substantially reduces the likelihood that the temperature of the interfacing surfaces of the seal ring 22 and the seat washer 26 will exceed the boiling point of the coolant.

The extremely high hardness of the diamond coatings 40 and 42 (10 on the Mohs scale) provided on the seal ring 22 and seat washer 26, respectively, make these surfaces resistant to the scoring and abrasion produced by solid contaminants or precipitated coolant chemicals on surfaces of lesser hardness. Moreover, the covalent bonding of the carbon atoms in the diamond structure of the coating minimizes the adherence of coolant solids to the faces of the seal ring 22 and the seat washer 26. Face separation caused by the formation and deposit of undesirable solids at the seal interface 28 should not occur with the face seal design of the present invention.

The highly reliable coolant pump seals of the present invention are formed by forming a seal ring element and a seat washer element which are correspondingly configured to produce a reliable, fluid tight seal in an internal combustion engine fuel pump. The seal ring element and the seat washer element are each formed from a suitable substrate material that is both compatible with diamond and is itself hard and wear-resistant. Preferred for this purpose are ceramics such as silicon carbide and silicon nitride. However, other substrates with a similar hardness that are compatible with diamond so that a diamond film or coating may be applied to the substrate surface to produce a reliable, fluid-tight seal under the conditions typically encountered in an internal combustion engine coolant pump would also be suitable. Compatible metals, such as, for example, stainless steel can also be used to form a substrate for the diamond coating.

The diamond film is applied to the selected substrate by a chemical vapor deposition process or, in the case of a compatible metal substrate, by a physical vapor deposition process. The seal ring element and the seat washer element may be used as coated with the diamond film. Alternatively, the diamond coated elements may be lapped and polished before their installation in the coolant pump seal. The diamond film is applied to a maximum thickness that is less than 200 µm, and preferably less than 50 µm, with a hardness greater than 2500 on the Vickers hardness scale and a thermal conductivity greater than 85 w/m·k at 25° C (room temperature).

The measured friction coefficients for the diamond film seal faces 40 and 42 at interface 28 are less than 0.10 when the interface is lubricated and less than 0.15 when the interface is dry. A silicon carbide face and an opposed hard carbon graphite face at an interface like the interface 28 in a seal currently in use has a lubricated coefficient of friction of 0.10 and a dry coefficient of friction of 0.12. Two opposing silicon carbide faces at an interface like the interface 28 have a lubricated coefficient of friction of 0.12 and a dry coefficient of friction 0.20.

Tests have been conducted to determine the reliability and longevity of the diamond-face seal of the present invention. A test coolant pump with a seal having a seal ring coated with a diamond film and a seat washer, also coated with a diamond film was set up to run under simulated engine operating conditions. The coolant supplemental additive concentration was initially at the recommended level and was increased in increments of one recommended level every 150 to 200 h until a final concentration of five times the recommended level was reached. After operating for a total of 850 h, the diamond face seal showed no leakage, even with the increased coolant chemical concentration. There was also no formation of coolant deposits on the diamond seal surfaces. In this same test, a coolant pump with a seal having silicon carbide and hard carbon graphite seal faces, currently in use, forms adherent coolant deposits and leaks coolant in 200 to 400 h with the coolant at a concentration of two to three times the recommended level.

A coolant pump face seal made in accordance with the present invention provides a durable, reliable, fluid-tight seal capable of functioning for extended periods without failure under the adverse operating conditions encountered in a heavy duty diesel internal combustion engine.

The seal structure of the present invention will find its primary applicability in the formation of reliable fluid-tight face seals for coolant pumps for heavy duty diesel internal combustion engines.

## Claims

1. Seal (10) for mechanically sealing a coolant pump of a heavy duty diesel internal combustion engine, wherein one first ring element is rotatable over a second, stationary ring element at an interface (28), wherein the second ring element is separated from the first ring element by a film of coolant, wherein the seal (10) comprises a rotatable annular seat washer (26) configured to cooperate with the first ring element and a stationary sealing ring configured to cooperate with the second ring element, a surface of the sealing ring (22) being positioned to form a defined mating interface (28) with a surface of the seat washer (26), thereby forming a fluid tight seal face about the film of coolant,
**characterized in**
that the surfaces of the sealing ring (22) and the seat washer (26) are coated with a thin film (40 42) of high thermal conductivity, covalently bonded diamond covering the defined mating interface (28), wherein the sealing ring (22) and the seat washer (26) are formed of a substrate compatible with diamond, and wherein the diamond films (40, 42) extend beyond the area defined by the interface (28) to form a heat conduction path to conduct heat away from the interface (28).

2. Seal according to claim 1, characterized in that the substrate is a hard, wear-resistant ceramic, and, preferably, that the ceramic is selected from the group consisting of silicon carbide and silicon nitride.

3. Seal according to claim 1, characterized in that the substrate is a metal, preferably stainless steel.

4. Seal according to any preceding claim, characterized in that the lubricated coefficient of friction at the interface (28) is less than 0.10 and/or that the dry coefficient of friction at the interface (28) is less than 0.15.

5. Seal according to any preceding claim, characterized in that the films (40, 42) of diamond are less than 200 µm thick, preferably less than 50 µm thick.

6. Seal according to any preceding claim, characterized in that the films (40, 42) of diamond have a hardness greater than 2500 on the Vickers hardness scale.

7. Seal according to any preceding claim, characterized in that the films (40, 42) of diamond have a thermal conductivity greater than 85 W/m·K at 25° C.

8. Seal according to claim 1, characterized in that both the seat washer (26) and the sealing ring (22) are formed from a hard, wear-resistant ceramic substrate, the diamond films (40 42) are coated on the seat washer (26) and the sealing ring (22) to a thickness of less than 50 µm, and the diamond films (40, 42) have a thermal conductivity greater than 85 W/m·K at 25° C and a Vickers hardness greater than 2500.

9. Seal according to claim 1, characterized in that both the seat washer (26) and the sealing ring (22) are formed from a metal substrate, the diamond films (40, 42) are coated on the seat washer (26) and the sealing ring (22) to a thickness of less than 50 µm, and the diamond films (40, 42) have a thermal conductivity greater than 85 W/m·K at 25° C and a Vickers hardness greater than 2500.

10. Method of forming a seal assembly for mechanically sealing a coolant pump of a heavy duty diesel internal combustion engine, wherein one first ring element is rotatable over a second, stationary ring element at an interface (28) defined between the first ring element and the second ring element, wherein the method includes the steps of:
a) forming a washer element configured to cooperate with the first ring element from a selected substrate compatible with diamond;
b) forming a sealing ring element configured to fit on the second ring element from a selected substrate compatible with diamond, wherein the washer element and the sealing ring element form a defined mating interface (28) separated by a thin film of coolant during operation of said coolant pump;
c) forming a heat conduction path to direct heat away from the defined mating interface (28) by applying a thin film (40, 42) of a covalently bonded diamond having a thermal conductivity greater than 85 W/m·K at 25° C to the surface of each of the washer element and the sealing ring element and to cover the defined mating interface (28) and an area on the surface of each of the washer element and the sealing ring element extending beyond the defined mating interface (28) between the washer element and the sealing ring element by a vapor deposition process selected from the group consisting of chemical and physical vapor deposition processes.

11. Method according to claim 10, characterized in that the substrates are selected from the group consisting of silicon carbide ceramics, silicon nitride ceramics and metals compatible with diamond.

12. Method according to claim 10 or 11, characterized in that, preferably for substrates selected from the group consisting of silicon carbide ceramics and silicon nitride ceramics, the diamond film is applied by a chemical vapor deposition process to a thickness of less than 200 µm, preferably for a metal compatible with diamond as a substrate, said diamond films (40, 42) are applied to the substrates by a physical vapor deposition process to a thickness less than 200 µm, and/or that the diamond films (40. 42) applied by said vapor deposition process have a Vickers hardness greater than 2500.

## Patentansprüche

1. Dichtung (10) zum mechanischen Abdichten einer Kühlmittelpumpe eines Schwerlastdieselinnenverbrennungsmotors, wobei ein erstes Ringelement zu einem zweiten, feststehenden Ringelement an einer Auflagefläche (28) drehbar ist, wobei das zweite Ringelement von dem ersten Ringelement durch einen Kühlmittelfilm getrennt ist, wobei die Dichtung (10) eine drehbare ringförmige Dichtungscheibe (26), die so konstruiert ist, daß sie mit dem ersten Ringelement zusammenwirkt, sowie einen feststehenden Dichtungsring umfaßt, der so konstruiert ist, daß er mit dem zweiten Ringelement zusammenwirkt, wobei eine Oberfläche des Dichtungsrings (22) so angeordnet ist, daß sie eine definierte Auflagefläche (28) mit einer Oberfläche der Dichtungsscheibe (26) bildet, wodurch eine fluiddichte Dichtungsfläche über den Film des Kühlmittels gebildet ist,
**dadurch gekennzeichnet,**
daß die Oberflächen des Dichtungsrings (22) und der Dichtungsscheibe (26) mit einem dünnen Film (40, 42) hoher Wärmeleitfähigkeit von kovalent gebundenem Diamant beschichtet sind, der die definierte Auflagefläche (28) bedeckt, wobei der Dichtungsring (22) und die Dichtungsscheibe (26) aus einem Substrat gebildet sind, das mit Diamant verträglich ist, und wobei sich die Diamantfilme (40, 42) über die von der Auflagefläche (28) definierte Fläche hinaus erstrecken, um einen Wärmeleitungsweg zu bilden, so daß Wärme von der Auflagefläche (28) abgeleitet wird.

2. Dichtung nach Anspruch 1, dadurch gekennzeichnet, daß das Substrat eine harte, abriebbeständige Keramik ist und daß die Keramik vorzugsweise aus der Gruppe bestehend aus Siliziumcarbid und Siliziumnitrid ausgewählt ist.

3. Dichtung nach Anspruch 1, dadurch gekennzeichnet, daß das Substrat ein Metall, vorzugsweise rostfreier Stahl ist.

4. Dichtung nach einem der vorangehenden Ansprüche, dadurch gekennzeichnet, daß der geschmierte Reibungskoeffizient an der Auflagefläche (28) geringer als 0,10 ist und/oder daß der trockene Reibungskoeffizient an der Auflagefläche (28) geringer als 0,15 ist.

5. Dichtung nach einem der vorangehenden Ansprüche, dadurch gekennzeichnet, daß die Diamantfilme (40, 42) weniger als 200 µm dick und vorzugsweise weniger als 50 µm dick sind.

6. Dichtung nach einem der vorangehenden Ansprüche, dadurch gekennzeichnet, daß die Diamantfilme (40, 42) eine Härte von mehr als 2500 auf der Vickersschen Härteskala aufweisen.

7. Dichtung nach einem der vorangehenden Ansprüche, dadurch gekennzeichnet, daß die Diamantfilme (40, 42) eine Wärmeleitfähigkeit von mehr als 85 W/m·K bei 25°C aufweisen.

8. Dichtung nach Anspruch 1, dadurch gekennzeichnet, daß sowohl die Dichtungsscheibe (26) als auch der Dichtungsring (22) aus einem harten, abriebbeständigen keramischen Substrat gebildet sind, die Diamantfilme (40, 42) auf der Dichtungsscheibe (26) und dem Dichtungsring (22) in einer Dicke von weniger als 50 µm aufgetragen sind und die Diamantfilme (40, 42) eine Wärmeleitfähigkeit von mehr als 85 W/m·K bei 25°C und eine Vickershärte von mehr als 2500 aufweisen.

9. Dichtung nach Anspruch 1, dadurch gekennzeichnet, daß sowohl die Dichtungsscheibe (26) als auch der Dichtungsring (22) aus einem Metallsubstrat gebildet sind, die Diamantfilme (40, 42) auf der Dichtungsscheibe (26) und dem Dichtungsring (22) in einer Dicke von weniger als 50 µm aufgetragen sind und die Diamantfilme (40, 42) eine Wärmeleitfähigkeit von mehr als 85 W/m·K bei 25°C und eine Vickershärte von mehr als 2500 aufweisen.

10. Verfahren zur Bildung einer Dichtungsanordnung zum mechanischen Abdichten einer Kühlmittelpumpe eines Schweilastdieselinnenverbrennungsmotors, wobei ein erstes Ringelement zu einem zweiten, feststehenden Ringelement an einer Auflagefläche (28) drehbar ist, die zwischen dem ersten Ringelement und dem zweiten Ringelement definiert ist, wobei das Verfahren folgende Schritte umfaßt:
a) Bilden eines Scheibenelements, das so konstruiert ist, daß es mit dem ersten Ringelement zusammenarbeitet, aus einem ausgewählten, mit Diamant verträglichen Substrat;
b) Bilden eines Dichtungsringelements, das so konfiguriert ist, daß es auf das zweite Ringelement paßt, aus einem ausgewählten, mit Diamant verträglichen Substrat, wobei das Scheibenelement und das Dichtungsringelement eine definierte Auflagefläche (28) bilden, die während des Betriebs der Kühlmittelpumpe durch einen dünnen Kühlmittelfilm getrennt ist;
c) Bilden eines Wärmeleitungsweges, um Wärme von der definierten Auflagefläche (28) abzuleiten, durch Auftragen eines dünnen Films (40, 42) eines kovalent gebundenen Diamants mit einer Wärmeleitfähigkeit von mehr als 85 W/m·K bei 25°C auf die Oberfläche sowohl des Scheibenelements als auch des Dichtungsringelements und durch Bedecken der definierten Auflagefläche (28) und einer Fläche an der Oberfläche sowohl des Scheibenelements als auch des Dichtungsringelements, die sich über die definierte Auflagefläche (28) zwischen dem Scheibenelement und dem Dichtungsringelement hinaus erstreckt, durch ein Dampfabscheidungsverfahren, das ausgewählt wird aus der Gruppe bestehend aus chemischen und physikalischen Dampfabscheidungsverfahren.

11. Verfahren nach Anspruch 10, dadurch gekennzeichnet, daß die Substrate ausgewählt werden aus der Gruppe bestehend aus Siliziumcarbidkeramiken, Siliziumnitridkeramiken und Metallen, die mit Diamant verträglich sind.

12. Verfahren nach Anspruch 10 oder 11, dadurch gekennzeichnet, daß vorzugsweise bei Substraten, die ausgewählt werden aus der Gruppe bestehend aus Siliziumcarbidkeramiken und Siliziumnitridkeramiken, der Diamantfilm durch ein chemisches Dampfabscheidungsverfahren in einer Dicke von weniger als 200 µm aufgetragen wird, vorzugsweise bei einem Substrat aus Metall, das mit Diamant verträglich ist, die Diamantfilme (40, 42) durch ein physikalisches Dampfabscheidungsverfahren in einer Dicke von weniger als 200 µm auf die Substrate aufgetragen werden, und/oder daß die Diamantfilme (40, 42), die durch das Dampfabscheidungsverfahren aufgetragen wurden, eine Vickershärte von mehr als 2500 haben.

## Revendications

1. Joint d'étanchéité (10) pour étancher par voie mécanique une pompe de réfrigérant d'un moteur diesel à combustion interne de grand rendement, dans lequel un premier élément annulaire est rotatif par-dessus un second élément annulaire stationnaire à une interface (28), dans lequel le second élément annulaire est séparé du premier élément annulaire par un film de réfrigérant, dans lequel le joint d'étanchéité (10) comprend une rondelle d'appui annulaire rotative (26) configurée pour coopérer avec le premier élément annulaire et un anneau d'étanchéité stationnaire configuré pour coopérer avec le second élément annulaire, une surface de l'anneau d'étanchéité (22) étant positionnée pour former une interface de jointement définie (28) avec une surface de la rondelle d'appui (26) pour ainsi former une face de joint étanche au fluide autour du film de réfrigérant,
caractérisé
en ce que les surfaces de l'anneau d'étanchéité (22) et de la rondelle d'appui sont enduites d'un film mince (40, 42) de diamant lié de manière covalente et possédant une conductibilité thermique élevée, recouvrant l'interface de jointement définie (28), dans lequel l'anneau d'étanchéité (22) et la rondelle d'appui (26) sont formés à l'aide d'un substrat compatible avec le diamant, et dans lequel les films de diamant (40, 42) s'étendent au-delà de la surface définie par l'interface (28) pour former une voie de conduction thermique pour éloigner la chaleur de l'interface (28).

2. Joint d'étanchéité selon la revendication 1, caractérisé en ce que le substrat est une matière céramique dure résistant à l'usure et de préférence en ce que la matière céramique est choisie parmi le groupe constitué par le carbure de silicium et le nitrure de silicium.

3. Joint d'étanchéité selon la revendication 1, caractérisé en ce que le substrat est un métal, de préférence de l'acier inoxydable.

4. Joint d'étanchéité selon l'une quelconque des revendications précédentes, caractérisé en ce que le coefficient de friction à l'interface (28), à l'état lubrifié, est inférieur à 0,10 et/ou en ce que le coefficient de friction à l'interface (28), à l'état sec, est inférieur à 0,15.

5. Joint d'étanchéité selon l'une quelconque des revendications précédentes, caractérisé en ce que les films de diamant (40, 42) possèdent une épaisseur inférieure à 200 µm, de préférence une épaisseur inférieure à 50 µm.

6. Joint d'étanchéité selon l'une quelconque des revendications précédentes, caractérisé en ce que les films de diamant (40, 42) possèdent une dureté supérieure à 2500 sur l'échelle de dureté de Vickers.

7. Joint d'étanchéité selon l'une quelconque des revendications précédentes, caractérisé en ce que les films de diamant (40, 42) possèdent une conductibilité thermique supérieure à 85 W/m.K à 25°C.

8. Joint d'étanchéité selon la revendication 1, caractérisé en ce qu'à la fois la rondelle d'appui (26) et l'anneau d'étanchéité (22) sont formés à l'aide d'un substrat dur en matière céramique résistant à l'usure, les films de diamant (40, 42) sont déposés sur la rondelle d'appui (26) et sur l'anneau d'étanchéité (22) pour obtenir une épaisseur inférieure à 50 µm, et les films de diamant (40, 42) possèdent une conductibilité thermique supérieure à 85 W/m.K à 25°C et une dureté Vickers supérieure à 2500.

9. Joint d'étanchéité selon la revendication 1, caractérisé en ce qu'à la fois la rondelle d'appui (26) et l'anneau d'étanchéité (22) sont formés à partir d'un substrat métallique, les films de diamant (40, 42) sont déposés sur la rondelle d'appui (26) et sur l'anneau d'étanchéité (22) pour obtenir une épaisseur inférieure à 50 µm, et les films de diamant (40, 42) possèdent une conductibilité thermique supérieure à 85 W/m.K à 25°C et une dureté Vickers supérieure à 2500.

10. Procédé pour former un assemblage de joint d'étanchéité pour étancher par voie mécanique une pompe de réfrigérant d'un moteur diesel à combustion interne à grand rendement, dans lequel un premier élément annulaire est rotatif par-dessus un second élément annulaire stationnaire à une interface (28) définie entre le premier élément annulaire et le second élément annulaire, dans lequel le procédé englobe les étapes consistant à:
a) former un élément en forme de rondelle configuré pour coopérer avec le premier élément annulaire, à partir d'un substrat sélectionné compatible avec le diamant;
b) former un élément d'anneau d'étanchéité configuré pour venir se disposer sur le second élément annulaire, à partir d'un substrat sélectionné compatible avec le diamant, dans lequel l'élément en forme de rondelle et l'élément en forme d'anneau d'étanchéité forment une interface de jointement définie (28) séparée par un mince film de réfrigérant au cours de la mise en service de ladite pompe de réfrigérant;
c) former une voie de conduction thermique pour diriger la chaleur à l'écart de l'interface de jointement définie (28) en appliquant un film mince (40, 42) d'un diamant lié de manière covalente, possédant une conductibilité thermique supérieure à 85 W/m.K à 25°C sur la surface respectivement de l'élément en forme de rondelle et de l'élément en forme d'anneau d'étanchéité, et pour recouvrir l'interface de jointement définie (28) et une aire à la surface respectivement de l'élément en forme de rondelle et de l'élément en forme d'anneau d'étanchéité, s'étendant au-delà de l'interface de jointement définie (28) entre l'élément de rondelle et l'élément d'anneau d'étanchéité, via un procédé de déposition en phase vapeur choisi parmi le groupe constitué par des dépositions en phase vapeur par des procédés chimique et physique.

11. Procédé selon la revendication 10, caractérisé en ce que les substrats sont sélectionnés parmi le groupe constitué par des matières céramiques de carbure de silicium, par des matières céramiques de nitrure de silicium et par des métaux compatibles avec le diamant.

12. Procédé selon la revendication 10 ou 11, caractérisé en ce que, de préférence pour des substrats choisis parmi le groupe constitué par des matières céramiques de carbure de silicium et par des matières céramiques de nitrure de silicium, le film de diamant est appliqué, via une déposition en phase vapeur par procédé chimique, pour obtenir une épaisseur inférieure à 200 µm, de préférence pour un métal compatible avec le diamant à titre de substrat, lesdits films de diamant (40, 42) sont appliqués sur les substrats, via une déposition en phase vapeur procédé chimique, pour obtenir une épaisseur inférieure à 200 µm, et/ou en ce que les films de diamant (40, 42) appliqués par lesdits procédés de déposition en phase vapeur possèdent une dureté Vickers supérieure à 2500.
